# EUROPEAN PATENT APPLICATION

(11) **EP 3 299 577 A1**
(43) Date of publication of application: **28.03.2018**
(21) Application number: 17176730.4
(22) Date of filing: 19.06.2017
(51) Int. Cl.: E21D 20/02, E21D 21/00, F16B 13/14

(54) **DEVICE, METHOD AND SYSTEM FOR LOADING FIXATIVES FOR ROCK BOLTS**

(30) Priority: 17.06.2016 AU 2016902364
(71) Applicant: Gazmick Pty Ltd, Williamstown VIC 3016 (AU)
(72) Inventor: Davison, Gary, Wiliamstown, Victoria (AU)
(74) Representative: Dennemeyer & Associates S.A.

(57) **Abstract**

The invention relates generally to the installation of elongate rod members such as rock bolts used for the stabilisation of geological formations such as the roof or side walls of an underground mine.

The invention provides in one aspect a device for loading a flowable fixative into an installation hole for a rod member, the flowable fixative being settable to a rigid format in the installation hole to secure the rod member therein, the device including: a chamber having a first internal volume for holding flowable fixative therein and an exit port for discharging, in use, flowable fixative from the first internal volume into the installation hole; and chamber volume reduction means for reducing the first internal volume whereby, in use, the flowable fixative within first internal volume flows through the exit port; the chamber having a fixed transverse dimension greater than that of the installation hole whereby, in use, the chamber is maintained externally of the installation hole.

## Description

### FIELD OF INVENTION

The present invention relates generally to the installation of elongate rod members such as rock bolts used for the stabilisation of geological formations such as, but not limited to, the roof or side walls of an underground mine, tunnel or above ground geological formations whether man made or naturally formed.

In one form, the invention relates to the loading of fixatives such as chemical anchors and cementitious grouts into drill holes.

In another form, the invention relates to the securing of rock bolts in drill holes.

In particular, the present invention relates to a device that reduces known difficulties associated with loading fixatives. Further, the present invention provides a method that reduces known difficulties associated with inserting fixative material into drill holes to secure rock bolts.

It will be convenient to describe the present invention in relation to man-made underground structures such as tunnels; however, it should be appreciated that the present invention is not so limited and can be used in the stabilisation of both above ground and underground geological structures, whether man-made or naturally occurring. Furthermore, while it will also be convenient to describe the present invention with reference to the mining industry, it should be appreciated that the present invention is not limited to mining applications and can be used by other industries such as civil engineering and geotechnical engineering.

### BACKGROUND ART

It is to be appreciated that any discussion of documents, devices, acts or knowledge in this specification is included to explain the context of the present invention. Further, the discussion throughout this specification comes about due to the realisation of the inventor and/or the identification of certain related art problems by the inventor. Moreover, any discussion of material such as documents, devices, acts or knowledge in this specification is included to explain the context of the invention in terms of the inventor's knowledge and experience and, accordingly, any such discussion should not be taken as an admission that any of the material forms part of the prior art base or the common general knowledge in the relevant art in Australia, or elsewhere, on or before the priority date of the disclosure and claims herein.

Rock bolts have been used for many years to support geological formations for mining, civil engineering and other purposes.

Where used herein the term 'rock bolt' is intended to refer to any elongate anchor for location in drill holes to stabilise ground-based formations including excavations and naturally formed structures, and may alternately be known by names such as 'rock stabiliser', 'roof-bolt', 'friction stabiliser' or 'split-set' bolt. Rock bolts transfer load from the unstable exterior of a geological formation, to the confined and much stronger interior of the rock mass.

Traditional rock bolts generally consist of steel rods with a mechanical or chemical anchor at one end or chemical anchor along their whole length and a face plate and nut at the other end. They are typically tensioned after installation by tightening the nut against the face plate which, in turn, engages the outwardly facing surface of the geological structure.

Another invention, known 'split set' rock bolts have an elongate tube that are generally of circular or C-shaped cross-section and have a longitudinal channel or groove along the entire length of the tube. Split set rock bolts are usually installed into a hole drilled into a geological formation using an impact tool.

The diameter of the drill hole is slightly less than the outer diameter of the elongate tube, so that during installation, the elongate tube is subject to radial compressive force. The compressive force causes the channel or groove to at least partly close, reducing the diameter of the tube to fit the diameter of the hole. This ensures that there is at least some frictional engagement between the elongate tube and the geological formation.

For permanent applications, high load areas, or in rock in which corrosive groundwater is present, the space between the bolt and the surrounding earth can be filled with an aqueous slurry of cementitious grout. This keeps the rock bolt in place and reduces the likelihood of rock bolt failure due to rusting or corrosion. Grouting changes a rock bolt from a ductile object into a stiff object and locks it in place creating a higher friction than is normally achieved. Shear strength is also increased, but grout shrinkage can reduce the stiffness of the rock bolt. The grout is typically a coarse cement composition that can flow along the drill hole and into narrow cavities to fill them. The grout subsequently sets to form a solid that consolidates with the adjoining earth or rock formations to form a consolidated mass.

The traditional method of grouting rock bolts is to use a short feed tube through which the grout is pumped into the drill hole, plus a smaller diameter breather tube extending to the end of the hole, to bleed the air from the hole. However, there are problems associated with the grouting of rock bolts. It can be difficult to pump grout into a drill hole in a manner that causes it to flow along the entire length of the rock bolt. Often air is trapped inside the drill hole and cannot be vented to make way for the flow of grout. Also, rock bolts are often inserted into the vertical drill holes in mine roofs. If grout of low viscosity or slow setting time is used it can tend to fall out of the drill hole under the action of gravity.

Mechanically anchored rock bolts can work loose from the drill hole, particularly in weak, closely jointed or soft rock. In these situations, chemical anchors are often used. Chemical anchors typically consist of a cartridge sheath containing two separate compartments, one holding a resin and the other holding a catalyst to cure the resin. The cartridges are pushed to the end of the drill hole ahead of the rock bolt, which is then spun into the cartridges. The compartments are thus broken open and the resin and catalyst are mixed together by the spinning action of the rock bolt. Setting of the resin commences within a few minutes of being mixed with the catalyst and subsequently cures to produce a very strong and immediate anchor.

Resin cartridges are high cost and difficult to manufacture, transport and store. The resin and the catalyst deteriorate at room temperature or higher so in hot environments there is a need for the product to be refrigerated and for careful rotational stock control. The less expensive cementitious grout tends to be used for large volume applications, but compared with resin, grout is extremely slow to cure.

There are, however, several difficulties associated with use of resin cartridges, particularly practical problems associated with inserting the resin cartridges into "distant" holes and breaking the plastic sheath of the cartridges and mixing the resin and catalyst together effectively. In some instances the bolt will not break the packaging holding the catalyst but lay alongside it in the hole or the plastic sheath holding the catalyst and/or the resin will wrap around the bolt 'isolating' the bolt from the mixed resin and thereby not bonding the bolt to the rock. This is known as "gloving". Without the catalyst packaging being broken, the resin mastic will not harden and the bolt will be ineffective.

Drill holes are typically drilled into unsupported and potentially unstable geological formations for the rock bolt to provide support for the formation. The unsupported material around the drill hole is associated with a risk of collapse or rockfall, therefore it is critical that workman do not work beneath an unsupported area. They are typically required to remain 5 to 6 metres from the area. However, it is difficult for the workmen to install resin in drill holes that are 5 to 6 metres removed from them. Preferably, resin packaged in sausage-shaped cartridges are pneumatically blown into drill holes but the process requires precise alignment of devices that are easily damaged in the underground environment. As an alternative, it is often necessary for the resin to be installed using pushing devices which are cumbersome and prone to damage. Furthermore, the resin cartridges are heavy and often fall from the drill holes. Workmen may take risks by approaching the unsupported earth to recover the fallen cartridges and by attempting to reinstall them in the drill holes. For very long holes the volume of resin required is quite large and the cartridges can be difficult to install into the drill holes.

Sometimes, because variations in the drilled hole length and/or diameter may exist, fractions of sausages may be required to be installed. This is not practical resulting in poor, i.e. non complete, encapsulation of rock bolts at the very least exposing the rock bolt to corrosion.

It is also important, and sometimes difficult, to maintain axial alignment during rotation of the rock bolt. Furthermore, the length of time and the number of rotations for spinning the rock bolt in the resin is limited. Once the setting process has been initiated, the structure of the resin can be damaged and the overall installation weakened by additional spinning. An over mixed chemical anchor is worse than an under mixed chemical anchor because the early gel formed is 'ground up' by the spinning.

In some rock structures, the walls of the drill hole become clay coated or wet during drilling. This tends to allow the resin cartridges to slip during rotation, resulting in incomplete mixing and unsatisfactory bonding, particularly in longer cartridges. Pockets of unmixed resin and catalyst and plastic cartridge sheaths may be left attached to the drill hole wall.

In highly fractured rock structures, the resin may quickly seep into the surrounding rock so that it never comes in contact with the catalyst. This leaves voids in the resin column surrounding the rock bolt with concomitant reduction in the effectiveness of the chemical anchor as compared with fully chemically encapsulated rock bolts.

Even if the diameter of the drill hole is correct, if the hole is drilled too deeply as compared to the length of the rock bolt (ie the bolt is not 'bottomed' in the drill hole), the resin and catalyst cannot be mixed at the end of the hole and are completely wasted.

Furthermore, packaged resin 'sausages' are difficult and relatively expensive to manufacture.

Accordingly, there is a need for better and more efficient loading of drill holes with fixatives such as curable resins and settable grouts. The inventor of this development has, in a previous patent application, proposed the use of a device for introducing curable resins and settable grouts into drilled installation holes for rock bolts and the like, the device, in use, being positioned within the drilled installation hole. While this arrangement is believed to provide significant improvements to the efficiency of introduction of such fixatives into drilled installation holes, the arrangement does have some difficulties in practice. Firstly, the proposed device is somewhat more complicated in structure than might be considered desirable. Secondly, because of its manner of use in one proposed embodiment, the volume of fixative that might be introduced into the drilled installation hole is somewhat restricted, which can provide some difficulties in particular applications.

### SUMMARY OF INVENTION

An object of the present invention is to improve the efficiency with which fixatives such as curable resins and settable grouts can be operationally introduced into a drilled installation hole without significantly restricting the volume of such fixatives that might be introduced.

A further object of the present invention is to improve the efficiency of installing a rock bolt in a drilled installation hole and to improve the anchoring of the rock bolt in the drilled installation hole.

According to one preferred aspect, the present invention provides a device for loading flowable fixative into an installation hole for a rod member, said flowable fixative being settable to a rigid format in said installation hole to secure said rod member therein, said device including: a chamber having a first internal volume for holding flowable fixative therein and an exit port for discharging, in use, flowable fixative from said first internal volume into said installation hole; and chamber volume reduction means for reducing said first internal volume whereby, in use, a said flowable fixative within first internal volume flows through said exit port; said chamber having a fixed transverse dimension greater than that of said installation hole whereby, in use, said chamber is maintained externally of said installation hole.

Providing a loading device for a flowable fixative that delivers such fixatives into an installation hole from an external position allows the operator to choose the volume of the fixative loaded. Devices that necessarily operate from within the installation hole are restricted as to the volume of fixative material that can be introduced.

Conveniently, the device may be provided with or without the fixative materials installed within the chamber defining the first internal volume.

The device described above may include a thrust member associated with the chamber and configured to be movable towards the exit port to reduce the first internal volume.

Conveniently, the chamber may include a first wall means generally surrounding said exit port, said thrust member being a second wall means spaced from the first wall means defining said first internal volume generally between said first and said second wall means.

In one preferred embodiment, a third wall means generally surrounds said first internal volume and connects said first wall means and said second wall means, said third wall means being collapsible when said second wall means is moved towards said first wall means.

In a further preferred embodiment, a third wall means generally surrounds said first internal volume and is connected to said first wall means, said second wall means being formed as a piston member slidably arranged within said third wall means to be, in use, movable towards said first wall means.

A delivery passage such as a spout, may extend from the exit port whereby, in use, the flowable fixative flows along said delivery passage from the exit port.

In a further preferred embodiment, the thrust member includes at least one frangible section that ruptures upon the application of force to the, or each, said frangible section of the thrust member.

The present invention also anticipates providing apparatus for loading a flowable fixative into an installation hole for a rock bolt in the form of a rod member, the apparatus including positioning and movement means for positioning a device as described above externally adjacent the installation hole with said exit port overlying an open face of said installation hole, said positioning and movement means also being adapted to actuate said chamber volume reduction means. Conveniently, the positioning and movement means also locates a said rock bolt adjacent said installation hole, said rock bolt being moved thereby through said device into said installation hole.

In yet another aspect, the present invention also provides a method of installing a rock bolt into an installation hole therefore, the method including providing a device as described above, the method including the steps of:
(a) moving said device to an external position adjacent an open end of said installation hole with said exit port overlying said open end;
(b) reducing said first internal volume of said device to deliver said flowable fixative into said installation hole;
(c) passing said rock bolt through said device and into said installation hole to distribute said flowable fixative material around said rock bolt; and
(d) removing said device and securing a tensioning pressure plate and nut to an end of said rock bolt.

In a still further aspect, the present invention also provides a method of installing a rock bolt into an installation hole therefor, said method including providing a device as described above, said method including the steps of:
(a) moving said device to a position externally adjacent an open end of said installation hole with said exit port overlying said open end;
(b) reducing said first internal volume of said device to deliver said flowable fixative into said installation hole;
(c) passing said rock bolt through said device and into said installation device to distribute said flowable fixative material around said rock bolt; and
(d) securing a tensioning pressure plate and nut to an end of said rock bolt.

In one possible process, the device remains positioned between the pressure plate and a rock or ground face surrounding the installation hole.

Conveniently, the flowable fixative includes at least a first component and a second component, one of said first or second components being adapted to set the other of said first or second components to a rigid format, said first and second components being mixed by rotation of said rock bolt within said installation hole.

In a further aspect of the aforesaid methods, the chamber of said device includes a peripheral wall generally surrounding said first internal volume, said peripheral wall, at least partially, collapsing to reduce said first internal volume.

Advantages provided by the present invention, or particular aspects of the present invention, include:
- an ability to select the volume of fixative materials loaded into an installation hole by locating the loading device externally of the installation hole,
- improved structure of the cured or set fixative including improved encapsulation of the rock bolt,
- reduced void formation in the fixative with a resultant improved load transfer and increasing load capacity of the rock bolt,
- absence of gloving,
- potentially achieving introduction of the fixative and the rock bolt either simultaneously or closely following one another in substantially a single action, saving load time, and
- an ability to install rock bolts remotely from operators as operators no longer need to install fixative materials separately by hand.

Further scope of applicability of embodiments of the present invention will become apparent from the detailed description given hereinafter. However, it should be understood that the detailed description and specific examples, while indicating preferred embodiments of the invention, are given by way of illustration only, since various changes and modifications within the spirit and scope of the disclosure herein will become apparent to those skilled in the art from this detailed description.

### BRIEF DESCRIPTION OF THE DRAWINGS

Further disclosure, objects, advantages and aspects of preferred and other embodiments of the present application may be better understood by those skilled in the relevant art by reference to the following description of embodiments taken in conjunction with the accompanying drawings, which are given by way of illustration only, and thus are not limitative of the disclosure herein. Further, a feature or combination of features, described with reference to one embodiment, might be used with another embodiment described and/or illustrated in the annexed drawings. In the annexed drawings:
- Fig 1a is a perspective drawing depicting the components of a typical, known, settable grouted rock bolt;
- Fig 1b is a perspective drawing depicting the components of a typical further known curable resin anchored and grouted rock bolt;
- Fig 2 is a perspective view of some components of one preferred embodiment of the present invention;
- Fig 2a shows the embodiment of Fig 2 during an installation process;
- Fig 2b illustrates a possible variation to the features shown in Figs 2 and 2a;
- Fig 2c illustrates a still further possible variation to the features shown in Figs 2, 2a and 2b;
- Fig 3 is a perspective view similar to Fig 2 showing a possible further preferred embodiment;
- Figs 4a and 4b illustrate a part of the components shown in Fig 3 showing possible variations;
- Fig 5 is a view of part of the components shown in Fig 3 illustrating a still further possible variation;
- Fig 6 is a plan view of one preferred form of pressure plate partly illustrated in Figs 2 and 3;
- Fig 7 is a section view taken along lines A-A or B-B of Fig 6;
- Fig 8 is an elevation view of one possible form of rock bolt that might be used with the rock bolt fixing system components illustrated and described with reference to other drawings of this specification;
- Fig 9 is a view similar to Fig 3 illustrating possible further feature variations of a device according to a preferred embodiment of this invention;
- Fig 10 is a partial section view taken along lines C-C of Fig 9 further illustrating a portion of the embodiment shown in Fig 9; and
- Fig 11 is a view similar to Figs 2, 3 and 9 illustrating yet another possible preferred embodiment according to the present invention.

### DETAILED DESCRIPTION

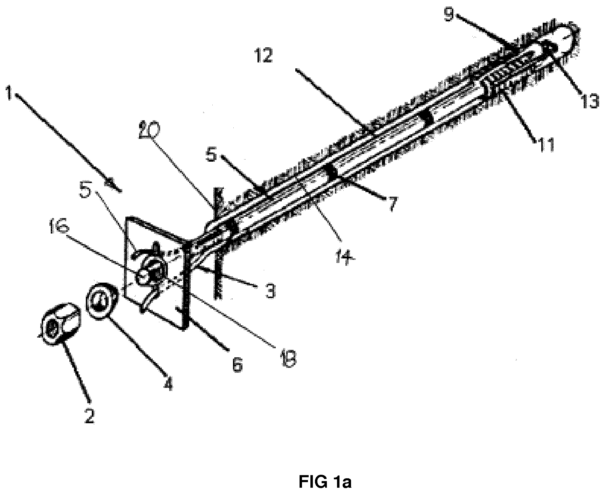

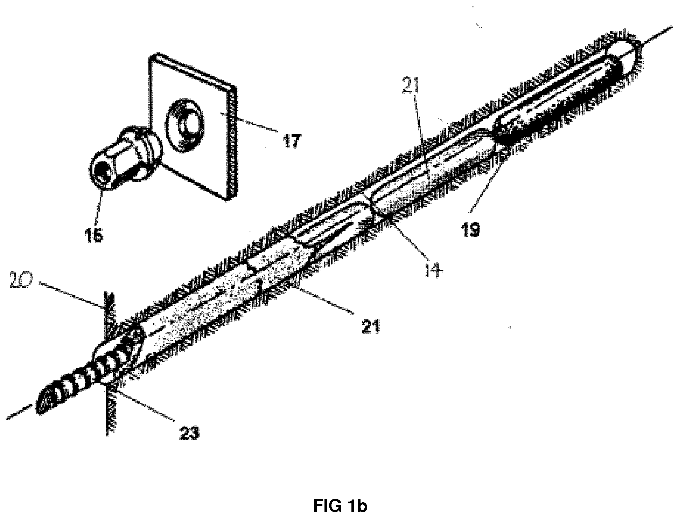

Fig 1 a is a drawing depicting the components and set up for a typical grouted rock bolt installation (1) of the prior art. A variety of types of rock bolts are commercially available but the basic principle of operation is similar in all. As shown in Fig 1a, the typical components are a tapered cone (9) with an internal thread and a pair of wedges held in place by a bail (13). The cone (9) is screwed onto the threaded end of the elongated body of the rock bolt (12) and the entire assembly is inserted in to a drill hole (14). The length of the drill hole is usually at least 100 mm longer than the bolt otherwise the bail (13) may be dislodged by being forced against the end of the drill hole (14). Once the assembly is in place a sharp pull on the end (16) of the bolt (12) will seat the rock bolt. Tightening the nut (2) on the bolt (12) forces the cone (9) further into the wedges, thereby increasing the anchoring force.

These rock bolts work well in hard rock but are not very effective in closely jointed rock and soft rock because rock in contact with the wedge grips tends to fail. Grout or resin cartridges are often inserted to alleviate this problem.

At the end (16) of the rock bolt (12) projecting from the drill hole (14) there is a fixed head or threaded end (18) and nut (2). A faceplate (1) distributes the load from the bolt (12) onto the rock face (20). In addition a tapered washer or conical seat (4) compensates for the fact that the rock face (20) is typically at right angles to the bolt (12). Tensioning of rock bolts is important to ensure that all the components are in contact and that a positive force is applied to the rock.

Traditionally, grouting is carried out by using a short grout tube (5) to feed the grout into the drill hole (14). A smaller diameter breather tube (3) is provided to bleed air from the drill hole (14) and is taped at spaced locations (7) to the rock bolt (12) and extends to the end of the hole (14).

Fig 1b illustrates in cross-section a typical set-up of the prior art for creating a resin anchored and grouted rock bolt. Slow setting grout cartridges (21) are located behind fast setting anchor cartridges (19) in a drill hole (14). The rod (23) of the rock bolt (12) is then spun through the cartridges (19) to mix the resin and catalyst, thus initiating the chemical reaction. The rock bolt (12) is tensioned using a faceplate (17) and nut (15) applied to the end of the rock bolt (12) after the fast setting anchor resin (19) has set. The cartridges of slow setting grout (21) subsequently set and lock the rod in place. The slow setting grout is timed to set in about 30 minutes. The rock bolt (12) can be tensioned within two or three minutes of installation after the fast anchor resin has set. This tension is then locked in by the later setting grout cartridges (21) and the resulting installation is a fully tensioned, fully installed rock bolt.

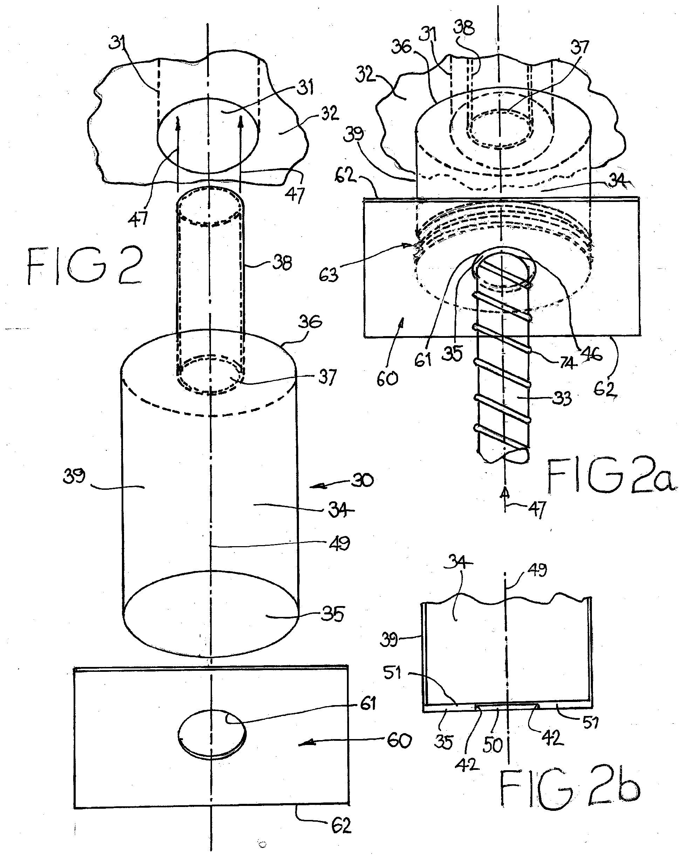

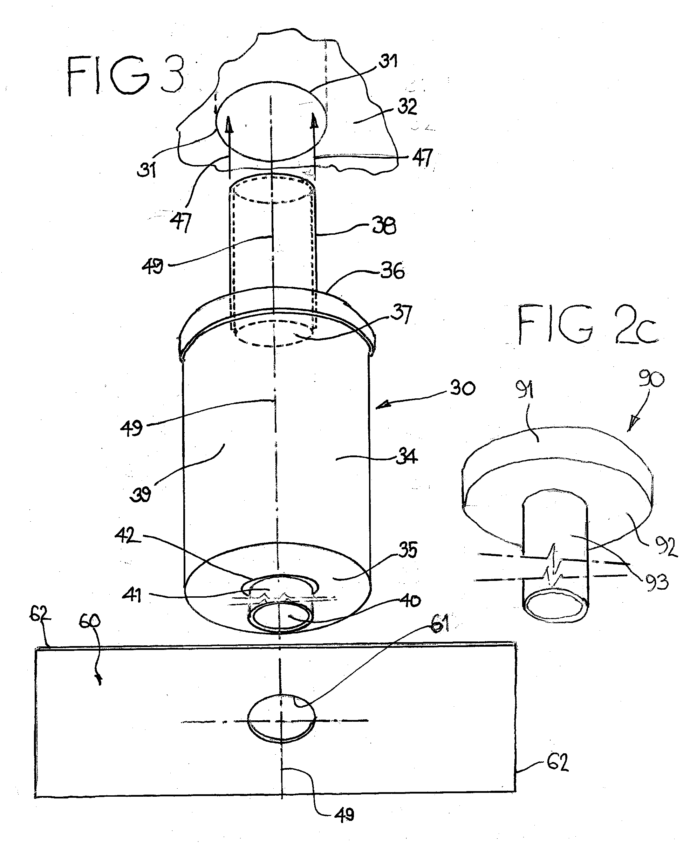

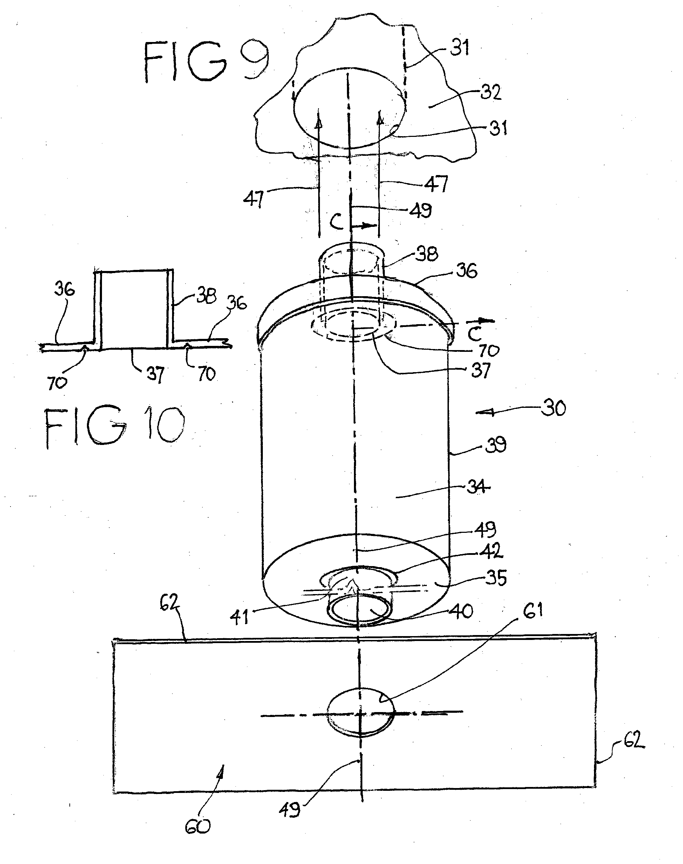

Fig 2 depicts a device (30) according to one preferred embodiment of the present invention for a fixative typically including fixative component materials, being a curable resin and a curing catalyst, into a drilled installation hole (31) formed in a rock or similar ground face (32) for anchoring a rock bolt (33) therein, thereby stabilising and supporting the surrounding region. It will of course be recognised that other settable fixative materials, such as cementitious materials with water, might also be loaded into a previously formed rock bolt installation hole (31). In Fig 2, the device (30) includes a generally cylindrical chamber (34) having a closed base wall (35), a closed top wall (36) except for an open exit port (37) leading to a discharge spout (38). The discharge spout (38) provides a flow passage for discharge of the settable grouting and/or anchoring materials when in a liquid or semi liquid form but might be closed by a removable cap, seal or the like for storage/transport of the device (30). The chamber (34), defined by a peripheral wall (39) extending between the closed base wall (35) and the top wall (36), will include some means of loading and positioning the fixative component materials therein. This may be by producing one or both of the top wall (36) and the base wall (35) as a removable and reattachable cap member (Figs 3/9). The fixative component materials are not illustrated in the annexed drawings but in one possible arrangement, may simply be contained within separate suitable sheath materials as is well known in this industry. In another possible arrangement, thin separate walls (again not illustrated) might be positioned in the chamber (34) to create separate compartments to contain, and maintain separate, the component materials of the fixative composition.

The chamber (34) defined by the peripheral wall (39) is generally cylindrical as depicted in the drawings but other shapes, including a variety of polygonal cross sectional shapes, are believed likely to be workable as described hereinafter. Similarly, the delivery spout (38) is illustrated as being circular in cross-section, but other cross-sectional shapes including polygonal shapes might also be employed. As shown in Fig 2, the outer dimension of the delivery spout (38) has a dimension whereby it will fit within a previously formed installation hole (31) in a ground or rock face (32), and in use, extend along at least a short distance of the installation hole (31) such that the distal end of the spout (38) is well within the hole (31). As is further shown in Figs 2 and 2a, the outer dimension of the peripheral wall (39) of the chamber (34) is significantly greater than the diameter of the drilled installation hole (31) such that, during installation of a rock bolt (33), the top wall (36) of the chamber (34) engages against the surface (32) surrounding the hole (31). This enables the volume of the chamber (34) to be increased and decreased to easily vary the volume of the fixative component materials that can be filled into the drilled installation hole (31). The relative ratio of length to width/diameter of the chamber (34) may be varied, as desired, to suit particular rock bolt installations.

In Figs 2 and 2a, the base wall (35) is closed and represented as a wall having a substantially uniform wall thickness. In Fig 2b, the base wall (35) is closed and includes a central portion (50) of reduced thickness relative to the remainder of the wall (51) to provide a location zone for an end (46) of a rock bolt (33) to be installed. Further, the reduced thickness provides a frangible zone (42) around its edge to assist the rock bolt (33) to break through the base wall (35). As a possible alternative, a frangible ring zone (42) might be provided by establishing a ring (42) of reduced thickness as illustrated in Figs 3, 4a, 4b, 5 and 9. Other arrangements including a frangible structure may be employed to enable a portion of the base wall (35) to rupture during the installation process for a rock bolt (33). One possibility is to provide an arrangement of spaced, small through holes passing through the base wall (35). These might be arranged in a ring such as those illustrated in the drawings. Another possibility might be to arrange the frangible rupture means as radial lines of weakness, for example extending radial from the axis line (49). Fig 2c illustrates another possible embodiment where a separate member (90) is provided positionable, in use, between the base wall (35) of the chamber (34) connectable thereto either permanently or in a removable manner. This may include an upward skirt (91) from a peripheral edge of a transverse wall (92). A location pocket (93) depends downwardly from the lower side of the transverse wall (92) to engage in use with an end of the rock bolt (33). A ring or section of weakness may be provided through the wall (92) as generally described elsewhere in this specification.

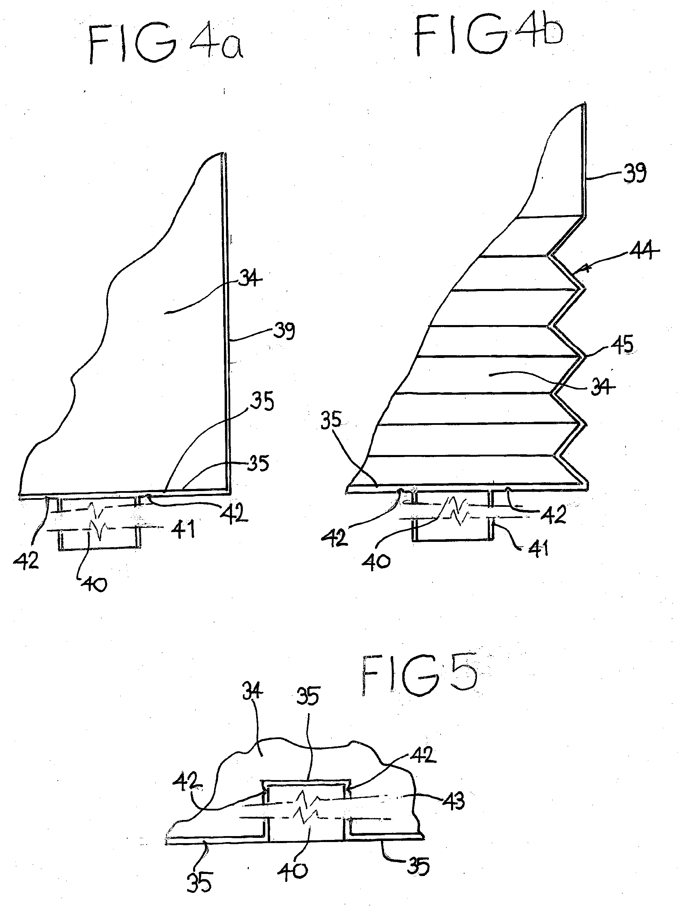

Figs 4a and 4b illustrate a possible modification where an annular wall (41) of any suitable length depends downwardly from a central zone of the base wall (35). The wall (41) does not need to be circular and other cross-sectional shapes could be employed. The wall (41) should be of a length to maintain the device (30) stable in use and provides a location cavity (40) for the end (46) of the rock bolt (33) during installation. If considered desirable, means for securing the end (46) of the rock bolt (33) to the device (30) could be included such as a cooperating screw thread between the inner wall surface of the wall (41) and the end zone (46) of the rock bolt (33). Other attachment means could be employed or the device (30) might simply sit on the end of the rock bolt (33). Fig 5 illustrates a possible further modification where the location cavity (40) is formed by providing a recessed zone formed by an upwardly directed wall portion (43) extending inwardly into the lower section of the chamber (34). A frangible ring line (42) might be provided along the wall portion (43) or in the base wall (35), as with other illustrated embodiments.

Fig 4b illustrates another possible variation where at least a lower region (44) of the peripheral wall (39) is formed with serrated rings (45). If desired, the serrated rings (45) might be provided when it is considered likely that the peripheral wall (39) may need some level of assistance in collapsing upwardly as described hereinafter. The serrated rings (45) are shown in Fig 4b as angled sections relative to one another, however, equally corrugated curved formation rings might also be employed.

During installation of a rock bolt (33) (Figs 2, 2a), the bolt is operationally positioned in a suitable installation machine (not illustrated). The end zone (46) passes through the central opening (61) of a pressure plate (60) and engages a central surface zone (62) of the base wall (35). Axial movement of the rock bolt (33) along the axis (49) moves the device (30) in the direction of arrows (47) axially towards the previously drilled installation hole (31). Alternatively, thrust pressure to the base region of the device (30) might be achieved by appropriate axial movement of the plate (60). At this stage, the rock bolt (33) is typically not rotated about the axis (49). The base wall (35) of the device (30) acts as a thrust member to bodily move the device (30) carrying the fixative component materials toward the hole (31). The delivery spout (38) enters the installation hole (31) and also moves axially into the hole (31) until the outer surface of the top wall (36) engages the rock or ground surface (32) surrounding the hole (31). At this point, axial bodily movement of the device (30) ceases, however, axial movement of the rock bolt (33) continues towards the installation hole (31). As a result, the base wall (35), acting as a thrust member, continues to move towards the rock or ground surface (32) and surprisingly crumples or collapses the peripheral wall (39) progressively from the base wall (35) towards the top wall (36) as shown at (63) (Fig 2a). This process continues until the entire length of the wall (39) is collapsed and the base wall (35) is positioned as close as possible to the top wall (36). In this process, the volume within the chamber (34) is progressively reduced with the fixative component materials being forced to and through the exit port (37) and into the installation hole (31). This process is aided by having the delivery spout (38) positioned as illustrated, however, it is believed the device will work without a delivery spout (38). As is also shown in Figs 2, 3, 9 and 11, the length and width/diameter of the spout (38) can be varied as described.

Once the fixative component materials have been delivered into the installation hole (31) and the device (30) has been collapsed as much as possible, further axial movement of the rock bolt (33) causes its end (46) to break through the base wall (35), assisted where provided, by the frangible rupture lines (42). The rock bolt (33) then also is caused to rotate about its axis while continuing to move axially through the exit port (37) and delivery spout (38) (when provided). In this regard, it is generally desirable for the flow passage of the exit port (37), and the delivery spout (38) when provided, to be of a size sufficient to allow the rock bolt (33) to pass therethrough. If it is not, then the top wall (36) might include a frangible rupture line (70) to allow the rock bolt (33) to pass substantially into the drilled installation hole (31). In so doing, a portion of the top wall (36), possibly including a delivery spout section (38) may be carried into the hole (31) and assist with moving the fixative material components into and along the hole (31). Typically, rock bolts (33) will normally include a main central section (73) extending along most of its length with a spiral radially extending projection (74). The projection (74), similar to reinforcing bars in concrete construction, provides great bonding with the fixative materials once installed and set; however, during installation, with the rock bolt rotated, the projection (74) also assists with mixing of the fixative materials within the installation hole (31).

In one possible further preferred embodiment, rather than providing frangible rupture lines in the walls (35) and (36), or in addition thereto, the end (46) of the rock bolt (33) might include an axial forward extending cutting or scoring projection that can be used to score or cut a facing wall such as the base wall (35), and if needed, the top wall (36) upon rotation of the bolt (33), to assist axial passage of the rock bolt (33) through the wall (or walls) (35), (36).

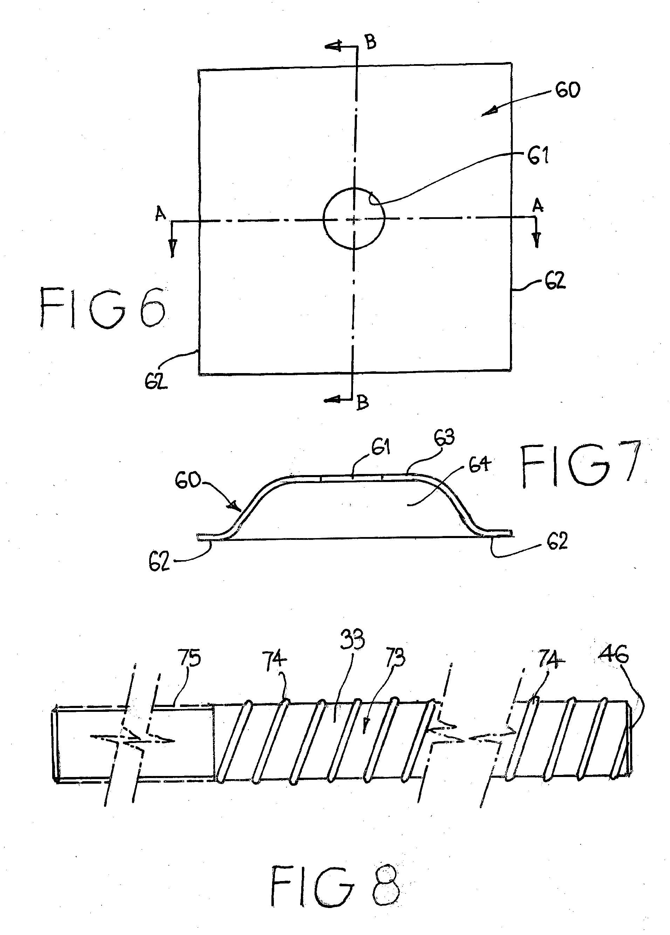

Rock bolts (33) typically include a normally screw threaded end section (75) at the outer end (76) generally opposite to the end (46). The screw threaded end section (75) cooperates with a nut (not shown) that assists with installation of the rock bolt (33) but also enables the rock bolt to be tensioned, as required, once installed with the fixative materials appropriately cured or set in their final installation position. Such tensioning occurs with the assistance of the pressure plate (60) with the tensioning nut located outwardly of the plate (60) with the screw threaded end section (75) of the bolt (33) extending a short distance beyond the outer surface of the pressure plate (60). It is generally desirable that at least a peripheral edge zone (62) of the pressure plate (60) contact the rock or ground surface (32) surrounding the installation hole (31). Figs 6 and 7 illustrate a possible preferred form of pressure plate (60) where the central hole (61) is located in a domed section (63) inwardly of the edge zone (62) providing a space (64) to contain the crushed or collapsed device (30) once the rock bolt (33) has been installed. Thrust from the rock bolt (33) may, during loading of the fixative material or materials from the chamber (34), be transmitted via a shear pin or other shearable element (or combination of such elements) to the chamber (34) to reduce its internal volume under a necessary predetermined axial load. When the internal volume is reduced to a zero or minimum level, the shear pin, element or combination of elements is broken, possibly by increasing the axial thrust load to a necessary shearing level, which level is also such as to enable the rock bolt to break through the base wall (35) of the device (30) so as to be able to enter the installation hole (31). The location of the shear pin, shear element (or elements) may be below the pressure plate (60), between the plate (60) and the chamber (34), or as part of the base wall (35) forming part of the device (30). Passage of the rock bolt (33) through the device (30) may be assisted by any frangible sections that may be provided.

In a possible alternative arrangement, the apparatus for installing the rock bolt may include means to permit the device (30), once collapsed or crushed substantially flat, to be removed by the installation apparatus following installation of the rock bolt. In this instance a substantially flat pressure plate (60) might be used and the device (30) is discarded. When the chamber (34) is fully compressed and before the rock bolt (33) pushes into the installation hole (31), the apparatus for driving the bolt (33) may act to retreat the bolt (33) away from the compressed chamber (34). A horizontal pushing device arranged on the installation apparatus may then be activated to push the compressed chamber (34) transversely away from the vicinity of the installation hole (31). This might be achieved by applying pressure at the edge of the collapsed chamber (34) which might break a frangible section at the base of the spout (38) or perhaps in the wall (36) surrounding the spout (38), leaving the spout (38) in the installation hole (31) and allowing the remainder of the device (30) to drop away. Subsequently, the bolt (33) is pushed back into the hole (31) and mixes and distributes the fixative material or materials therein.

If considered desirable, a plug member may be placed into the chamber (34) which, upon compression of the chamber (34), is pushed to the exit part (37) and/or spout (38) blocking the fixative materials from exiting the hole (31) under the action of gravity. These parts of the device (30) will then be carried to the inner end of the hole (31) and do not impact upon the desired fully encapsulation of the rock bolt (33) in the fixative materials.

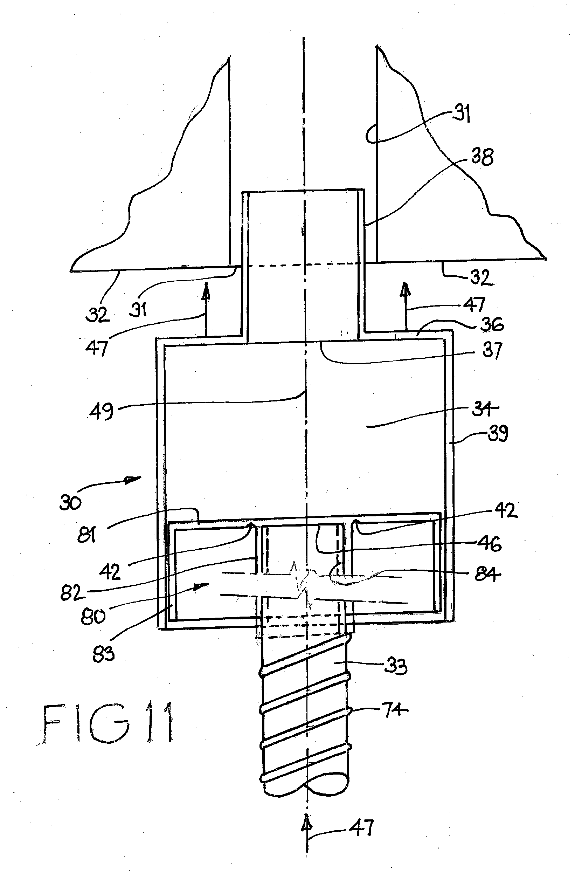

Fig 11 illustrates a still further possible preferred embodiment. Similar features described in earlier embodiments have been given the same reference numerals and will not be further described in detail here. In this embodiment, the device (30) includes a top or forward facing wall (36), a central exit port (37) passing therethrough to a delivery spout (38). A peripheral wall (39) extends from the top wall (36) and is open at its lower or free end. A piston member (80) is slidably received in the peripheral wall (39) with the chamber (34) being formed between the wall (36), the peripheral wall (39) and the upper wall or face (81) of the piston member (80). A peripheral skirt (83) keeps the piston member (80) stable such that it slides upwardly to reduce the volume of the chamber (34). In so doing, fixative material components loaded in the chamber (34) are pressed towards the exit port (37) and delivery spout (38) as the wall (81) moves towards the wall (36). In operation, an end (46) of a rock bolt (33) may be placed in a cavity defined by an annular wall (82). The end (46) may simply sit in this cavity or alternatively might be fastened to the wall (82) by any suitable means including a screw thread connection (84) as illustrated in Fig 11. The rock bolt (33) may be mounted in loading machinery such that bolt (33) moves in the direct of arrows (47) until the top wall (36) engages the face (32) surrounding the installation hole (31). At this stage, bodily movement of the chamber (34) ceases but the piston member (80) continues to move towards the wall (36) expelling fixative materials through the exit port (37) and the delivery spout (38) into the installation hole (31). When the piston member (80) engages the top wall (36), further axial forces applied to the wall (81) cause the frangible line (42) to rupture and the rock bolt (33) passes through the delivery passage defined by the delivery spout (38) into the installation hole (31). At this stage, the rock bolt (33) might also be rotated to promote mixing of the fixative components as well as to assist movement of the fixative materials along the installation hole (31) as well as around the rock bolt (33). The piston member (80), in this embodiment, acts as a thrust member to move the fixative materials from the chamber (34) into the installation hole (31).

While this invention has been described in connection with specific embodiments and various alternative features, it will be understood that it is capable of further modification(s). This application is intended to cover any variations uses or adaptations of the invention following in general, the principles of the invention and including such departures from the present disclosure as come within known or customary practice within the art to which the invention pertains and as may be applied to the essential features hereinbefore set forth.

As the present invention may be embodied in several forms without departing from the spirit of the essential characteristics of the invention, it should be understood that the above described embodiments are not to limit the present invention unless otherwise specified, but rather should be construed broadly within the spirit and scope of the invention as defined in the appended claims. The described embodiments are to be considered in all respects as illustrative only and not restrictive.

Various modifications and equivalent arrangements are intended to be included within the spirit and scope of the invention and appended claims. Therefore, the specific embodiments are to be understood to be illustrative of the many ways in which the principles of the present invention may be practiced. In the following claims, means-plus-function clauses are intended to cover structures as performing the defined function and not only structural equivalents, but also equivalent structures.

"Comprises/comprising" and "includes/including" when used in this specification is taken to specify the presence of stated features, integers, steps or components but does not preclude the presence or addition of one or more other features, integers, steps, components or groups thereof. Thus, unless the context clearly requires otherwise, throughout the description and the claims, the words 'comprise', 'comprising', 'includes', 'including' and the like are to be construed in an inclusive sense as opposed to an exclusive or exhaustive sense; that is to say, in the sense of "including, but not limited to".

## Claims

1. A device for loading a flowable fixative into an installation hole for a rod member, said flowable fixative being settable to a rigid format in said installation hole to secure said rod member therein, said device including:
(a) a chamber having a first internal volume for holding flowable fixative therein and an exit port for discharging, in use, flowable fixative from said first internal volume into said installation hole; and
(b) chamber volume reduction means for reducing said first internal volume whereby, in use, a said flowable fixative within first internal volume flows through said exit port;
said chamber having a fixed transverse dimension greater than that of said installation hole whereby, in use, said chamber is maintained externally of said installation hole.

2. A device according to claim 1 wherein said first internal volume contains a said flowable fixative.

3. A device according to claim 1 or claim 2 wherein the device includes a thrust member associated with said chamber and configured to be movable towards said exit port to reduce said first internal volume.

4. A device according to claim 3 wherein said chamber includes a first wall means generally surrounding said exit port, said thrust member being a second wall means spaced from the first wall means defining said first internal volume generally between said first and said second wall means.

5. A device according to claim 4 wherein a third wall means generally surrounds said first internal volume and connects said first wall means and said second wall means, said third wall means being collapsible when said second wall means is moved towards said first wall means.

6. A device according to claim 4 wherein a third wall means generally surrounds said first internal volume and is connected to said first wall means, said second wall means being formed as a piston member slidably arranged within said third wall means to be, in use, movable towards said first wall means.

7. A device according to any one of claims 1 to 6 wherein a delivery passage extends from said exit port whereby, in use, the flowable fixative flows along said delivery passage from the exit port.

8. A device according to any one of claims 3 to 6 wherein the thrust member includes at least one frangible section that ruptures upon the application of force to a said frangible section of the thrust member.

9. Apparatus for loading a flowable fixative into an installation hole for a rock bolt in the form of a rod member, said apparatus including positioning and movement means for positioning a device according to any one of claims 2 to 8 externally adjacent said installation hole with said exit port overlying an open face of said installation hole, said positioning and movement means also being adapted to actuate said chamber volume reduction means.

10. Apparatus according to claim 9 wherein said positioning and movement means also locates a said rock bolt adjacent said installation hole and said rock bolt being moved thereby through said device into said installation hole.

11. A method of installing a rock bolt into an installation hole therefor, said method including providing a device according to claim 2, said method including the steps of:
(a) moving said device to an external position adjacent an open end of said installation hole with said exit port overlying said open end;
(b) reducing said first internal volume of said device to deliver said flowable fixative into said installation hole;
(c) passing said rock bolt through said device and into said installation hole to distribute said flowable fixative material around said rock bolt; and
(d) removing said device and securing a tensioning pressure plate and nut to an end of said rock bolt.

12. A method of installing a rock bolt into an installation hole therefor, said method including providing a device according to claim 2, said method including the steps of:
(a) moving said device to a position externally adjacent an open end of said installation hole with said exit port overlying said open end;
(b) reducing said first internal volume of said device to deliver said flowable fixative into said installation hole;
(c) passing said rock bolt through said device and into said installation device to distribute said flowable fixative material around said rock bolt; and
(d) securing a tensioning pressure plate and nut to an end of said rock bolt.

13. A method according to claim 12 wherein said device remains positioned between said pressure plate and a rock or ground face surrounding said installation hole.

14. A method according to any one of claims 11 to 13 wherein said flowable fixative includes at least a first component and a second component, one of said first or second components being adapted to set the other of said first or second components to a rigid format, said first and second components being mixed by rotation of said rock bolt within said installation hole.

15. A method according to any one of claims 11 to 14 wherein the chamber of said device includes a peripheral wall generally surrounding said first internal volume, said peripheral wall, at least partially, collapsing to reduce said first internal volume.
